# EUROPEAN PATENT SPECIFICATION

(11) **EP 1 546 419 B1**
(45) Date of publication and mention of the grant of the patent: **30.05.2007**
(21) Application number: 03811965.7
(22) Date of filing: 28.08.2003
(51) Int. Cl.: C22B 5/10, C01B 33/025

(54) **PRODUCTION OF METALS AND ALLOYS USING SOLID CARBON PRODUCED FROM CARBON-CONTAINING GAS**
HERSTELLUNG VON METALLEN UND LEGIERUNGEN UNTER VERWENDUNG VON AUS EINEM KOHLENSTOFFHALTIGEN GAS ERZEUGTEM FESTEM KOHLENSTOFF
PROCEDE DE PRODUCTION DE METAUX ET D'ALLIAGES A L'AIDE DE CARBONE SOLIDE PRODUIT A PARTIR DE GAZ CONTENANT DU CARBONE

(30) Priority: 29.08.2002 GB 0220135; 26.08.2003 GB 0319941
(43) Date of publication of application: 29.06.2005
(73) Proprietor: Elkem AS, 0377 Oslo (NO)
(72) Inventor: EDWIN, Emil, N-7043 Trondheim (NO); ARNESEN, Tore, N-7056 Ranheim (NO); VIDDAL, Torgeir, N-7031 Trondheim (NO); AASER, Knut, Ivar, N-4016 Stavanger (NO); LARSEN, Hilde, Løken, N-0873 Oslo (NO); JOHANSEN, Johan, Arnold, N-4621 Kristiansand (NO)
(74) Representative: Rees, David Christopher
(86) International application number: PCT/NO2003/000297
(87) International publication number: WO 2004/048621

(56) References cited:
- WO-A1-02/095079
- WO-A2-00/47784
- DE-A1- 10 220 075
- US-A- 3 999 981
- US-A- 4 460 556

## Description

### Field of Invention

This invention relates to the use of carbon nanofibre products produced from a carbon-containing gas, in particular, for the production of metals and alloys.

### Background Art

The production of metals and alloys, including pseudometals, pseudometal alloys and semiconductors (e.g. silicon, ferrosilicon, etc), frequently involves the reduction of a metal compound (e.g. an oxide or sulphide) using carbon.

Thus for example in the production of silicon, silica (e.g. quartz) and a carbon material (e.g. coke, coal or charcoal) are introduced in the top of an electric reduction furnace having submerged carbon electrodes and the silica is reduced and the carbon oxidized. This can be written simplistically as

SiO₂ + 2C = Si + 2CO

More precisely, the reaction involves the intermediate formation of SiO-gas and SiC which react to give Si and CO at a temperature of about 2000°C.

Likewise carbon is used as a reductant in the production of aluminium by carbothermic reduction of alumina. In this process, described in WO 00/40767 (the content of which is hereby incorporated by reference), alumina is heated with carbon to produce aluminium metal. The metal product contains aluminium carbide as a contaminant but this can be precipitated out of the molten metal by addition of scrap aluminium.

The carbon used in these processes, coming as it originally does from a biological source, must meet various purity requirements as impurities in the carbon lead to impurities in the metal product. Where, for example, silicon is being produced for use in the electronics industry, these purity requirements are especially stringent. Further, the carbon must have a sufficient reactivity.
It has long been known that the interaction of a carbon-containing gas and metal surfaces can give rise to dehydrogenation and the growth of carbon "whiskers" on the metal surface. More recently it has been found that such carbon whiskers, which are hollow carbon fibres having a diameter of about 3 to 100 nm and a length of about 0.1 to 1000 µm, have the ability to act as reservoirs for hydrogen storage (see for example Chambers et al. in J.Phys.Chem. B 102: 4253-4256 (1998) and Fan et al. in Carbon 37: 1649-1652 (1999)).

Several researchers have sought to produce these carbon nanofibres (CNF) and to investigate their structure, properties and potential uses and such work is described in a review article by De Jong et al in Catal. Rev. - Sci. Eng. 42: 481-510 (2000). De Jong suggests that the possible uses for CNF fall into four categories: as electrical components; as polymer additives; for gas storage; and as catalyst supports. Their use as reducing agents is not suggested and, given the relative complexity of their production as compared with the production of coal, coke or charcoal, it is clear that this use has not previously been envisaged.

As described by De Jong et al. (supra) and in a further review article by Rodriguez in J. Mater. Res. 8: 3233-3250 (1993), transition metals such as iron, cobalt, nickel, chromium, vanadium and molybdenum, and their alloys, catalyse the production of CNF from gases such as methane, carbon monoxide, synthesis gas (ie H₂/CO), ethyne and ethene. In this reaction, such metals may take the form of flat surfaces, of microparticles (having typical sizes of about 100 nm) or of nano-particles (typically 10-50 nm in size) supported on an inert carrier material, eg silica or alumina. The metal of the catalyst must be one which can dissolve carbon or form a carbide.

Both De Jong et al (supra) and Rodriguez (supra) explain that carbon absorption and CNF growth is favoured at particular crystallographic surfaces of the catalyst metal.

### Description of invention

We have now found that carbon products produced from a carbon-containing gas such as carbon nanofibres are particularly suited for use in metal ore reduction.

The particular suitability of CNF for metal ore reduction arises for three reasons: the growth of CNF involves diffusion of carbon through the metal catalyst, effectively minimizing the presence of impurities within the CNF itself; the metal catalyst and any catalyst support can be selected from materials whose presence in the ore reducing reaction does not lead to unwanted impurities in the metal product; and if desired the metal catalyst and/or the catalyst support may readily be removed from the CNF before it is used for ore reduction.

Thus viewed from one aspect the invention provides a process for the production of a metal or an alloy in a reduction reactor which comprises reducing a metal ore with a solid carbon material produced from a carbon-containing gas outside the reduction reactor, characterised in that carbon nanofibres are used as the solid carbon material.

The carbon products may be produced from any gas suitable for CNF production, such as C 1-3 hydrocarbons (such as for example methane, ethyne, ethene etc.) carbon monoxide or synthesis gas.

As will be clear from the discussion above, the terms metal and alloys as used herein embraces metals comprising one or more than one element as well as semiconductors and other materials which are "metallic" in some but not all properties. The metal or alloy produced by the process of the present invention are any metal and alloy normally produced by carbothermic reduction, including iron, silicon, aluminium and ferro alloys like ferrosilicon, ferromanganese, ferronickel, ferrochromium and other. The metal produced or alloy by the process of the present invention preferably comprises silicon or aluminium and particularly preferably is silicon, ferrosilicon (FeSi), and aluminium.

The CNF used in the process of the present Invention may or may not contain a catalyst and/or a catalyst support used in its own production. Where the metal being produced in the process of the invention comprises silicon, the CNF used is preferably CNF prepared using a silica-supported catalyst (as removal of the catalyst support from the CNF is thus unnecessary). Likewise, where the metal being produced is aluminium, the CNF used is preferably CNF prepared using an alumina-supported catalyst. Moreover, where the metal being produced is hafnium, titanium or zirconium (metals which are important as catalysts in the polymer industry), the CNF used is preferably CNF prepared using a hafnium oxide, titania or zirconia supported catalyst.

Where the metal being produced by the process of the invention does not contain silicon or aluminium (or should not contain undue levels of silicon or aluminium), the CNF used can be produced using a silica or alumina supported catalyst with the support being removed from the CNF before it is used in the ore reduction. Alternatively and preferably however the CNF will be produced using an unsupported metal catalyst or a metal catalyst supported on a particulate support which does not contribute undesired levels of impurity. Such a particulate support may for example be a polymer (preferably a sulphur, phosphorus and boron-free polymer), carbon (e.g. CNF) or an inorganic compound (preferably an oxide, carbide or nitride) the elemental components of which will not contribute undesired levels of impurity, e.g. an oxide of the element or one of the elements of the metal being produced. Such supports are preferably porous, or more particularly they preferably have a surface area which is higher than that of a smooth sphere of the same particle size, preferably at least 20 times higher. In general, such particulate supports will desirably not consist of compounds of sulphur, phosphorus or boron.

Where the metal and alloy being produced in the process of the invention comprises a transition metal in which carbon can dissolve or which can form carbides, it is especially preferred that that same metal be used as the catalyst for the preparation of the CNF for use in the ore reduction reaction, as in this way removal of the metal catalyst from the CNF is unnecessary. Thus for example for the production of ferrosilicon, it is preferred that the CNF be produced using an iron on silica or iron on CNF catalyst.

The production of CNF suitable for use according to the present invention is described in detail in British Patent Application No. 0311811.4 and PCT Application PCT/GB03/02221, the contents of which are hereby incorporated by reference.

Where it is desired to remove catalyst metal or catalyst support from the CNF before it is used in ore reduction according to the invention, this may be effected for example by acid or base treatment and/or by heat treatment, e.g. to a temperature above 1000°C, preferably above 2000°C, for example 2200 to 3000°C. Thus for example heat treatment of CNF containing 1% wt nickel at 2500°C reduced the nickel content to 0.0017% wt. Alternatively, the catalyst metal may be removed from the CNF by treatment with carbon monoxide to generate volatile metal carbonyls. This will typically involve treatment with carbon monoxide at elevated temperature and pressure, e.g. at least 50°C and at least 20 bar, preferably 50 to 200°C and 30 to 60 bar. The carbon monoxide is preferably flushed through the CNF and the metal carbonyl is carried away in the carbon monoxide flow. Especially preferably the carbon monoxide flow from the CNF is passed through a bed of a porous particulate catalyst support material (e.g. alumina, silica, titania, etc) so as to generate fresh catalyst for CNF production.

For use in ore reduction, the CNF is preferably agglomerated to produce pellets of 1 to 20 mm maximum dimension (e.g. diameter), more preferably 3 to 13 mm. The CNF may be used on its own or in combination with a further carbon material, e.g. coal, coke or charcoal. If used in combination with another carbon material, the CNF preferably constitutes at least 25% wt, more preferably at least 50% wt, especially at least 75% wt, more especially at least 90% wt of the total carbon material. Thus the quantity of CNF in such a combination may be selected such that the overall level of undesired elemental impurities in the carbon material is within the acceptable limits for the particular metal being produced by the reduction reaction. Thus for example for the production of silicon for solar cells, the total phosphorus content in the carbon should be less than 5 ppm (wt), while for the electronics industry it should be below 200 ppm (wt).

Likewise for the production of silicon for the electronics industry, the total boron content of the carbon should be less than 30 ppm (wt).

The ore reduction process of the invention may be effected using the conditions and relative quantities of ore and carbon material conventional for reduction of the same ores using conventional carbon materials, e.g. in furnaces operating at temperatures operating at up to 2000°C or even higher.

The solid carbon product may also be used in the form of agglomerates of the carbon product and one or more ores or minerals. Thus for the production of silicon, agglomerates containing the solid carbon product and quartz may be used.

Viewed from a further aspect the invention provides the use of solid carbon nanofibres produced from carbon-containing gas like hydrocarbon gases, in the reduction of metal ores to form metals or metal alloys.

### Detailed description of the invention

The invention will now be described further with reference to the following non-limiting Examples where Examples 1 to 3 describe the production of CNF usable in the process of the invention and where Example 4 shows the SiO-reactivity of CNF.

### Example 1

### CNF Production

Carbon containing gas (90% mol methane and 10% mol hydrogen) at a pressure of 5 bar was introduced at a flow rate of 400 mL/minute and a temperature of 550°C into a horizontal tubular reactor having a conical section increasing in cross-section in the flow direction. Before the reaction began, 0.3g of a aluminium-leached nickel:aluminium intermetal catalyst (Amperkat® SK Ni 3704 from H.C. Starck GmbH & Co KG, Goslar, Germany) was placed at the narrowest point of the reactor. The gas flow was maintained for 30 hours by which time CNF generation had ceased.

### Example 2

### CNF Production

Carbon containing gas (90% mol methane and 10% mol hydrogen) at a pressure of 5 bar was introduced at a flow rate of 400 mL/minute and a temperature of 550°C into a horizontal tubular reactor having a conical section increasing in cross-section in the flow direction. Before the reaction began, 0.3g of a aluminium-leached 68% Nickel/32% Iron:aluminium intermetal catalyst (Amperkat® SK Ni Fe 6816 from H.C. Starck GmbH & Co KG, Goslar, Germany) was placed at the narrowest point of the reactor. The gas flow was maintained for 30 hours by which time CNF generation had ceased.

### Example 3

### CNF Production

0.04 g of intermetal catalyst (SK-Ni 5546 from H.C. Starck GmbH & Co KG as described earlier) was placed in a horizontal tubular reactor. The reactor was heated to 480°C with a nitrogen:hydrogen (1:1 by mole) mixture at a rate of 400 C°/hour. Then methane at 480°C and 6 bar was flowed through the reactor for 30 minutes at 1.6 Umin. The reactor temperature was raised to 630°C at 600 C°/hour and a gas mixture comprising 1.6 L/min CH, 250 mL/min hydrogen and 40 mL/min nitrogen was flowed through the reactor at 630°C and 6 bar for 24 hours. The carbon product field was in the range 13.6 to 15g C, i.e. 340 to 375 g C/g catalyst. Using a 3 hour production run, 6-8 gC may be produced analogously.

### Example 4

CNF produced according to Example 1 was tested for SiO reactivity. CNF was filled into a reacting chamber.

SiO reactivity was measured by means of a standardized method where a gas mixture consisting of 13.5 % SiO, 4.5 % CO the remainder being argon, at a temperature of about 1650°C is passed through a bed of the material to be tested. When the gas mixture comes into contact with the carbon material in the bed, more or less SiO (g) will react with the carbon to form SiC and CO-gas. The content of CO in the gas mixture which has passed through the carbon materials in the bed is analyzed and the amount of SiO which has reacted with carbon for the formation of SiC is calculated. The amount of SiO which passes the bed unreacted gives a measure for the reactivity as a low amount of SiO reflects a high reactivity while a high amount of SiO reflects a low reactivity. This method is described in the paper "Reactivity of reduction materials in the production of Silicon, Silicon-rich Ferro alloys and Silicon-Carbide" by J.Kr. Tuset and O. Raaness, AIME EI. Furnace Conference, St. Lois, Miss, Dec. 1979.

For the CNF tested in this example a reactivity number of 2100 ml of SiO was obtained. This shows that CNF has about the same SiO reactivity as petrol coke which to day is used as a reduction material in the carbothermic production of silicon from quartz.

This example shows that CNF is well suited as a carbon reduction material in the production of metals and alloys.

## Claims

1. A process for the production of a metal or an alloy in a reduction reactor which comprises reducing a metal ore with a solid carbon material produced from a carbon-containing gas outside the reduction reactor, **characterised in that** carbon nanofibres are used as the solid carbon material.

2. A process as claimed in Claim 1, **characterised in that** the solid carbon material is produced from a hydrocarbon gas.

3. A process as claimed in Claim 1, **characterised in that** the solid carbon material is produced from synthesis gas.

4. A process as claimed in Claim 1 or 2, **characterised in that** the metal or alloy comprises at least one element selected from silicon, aluminium, titanium, zirconium, hafnium manganese, chromium, iron and nickel.

5. A process as claimed in Claim 5, **characterised in that** the metal is silicon or ferrosilicon.

6. A process as claimed in Claim 4 or Claim 5, **characterised in that** the carbon nanofibres are produced using a silica-supported catalyst.

7. The use of solid carbon nanofibres produced from carbon-containing gas for the reduction of metal ores to form metals or metal alloys.

## Patentansprüche

1. Verfahren zur Herstellung eines Metalls oder einer Legierung in einem Reduktionsreaktor, das das Reduzieren eines Metallerzes mit einem aus einem kohlenstoffhaltigen Gas außerhalb des Reduktionsreaktors erzeugten festen Kohlenstoffmaterial umfaßt, **dadurch gekennzeichnet, daß** Kohlenstoff Nanofasern als das feste Kohlenstoffmaterial verwendet werden.

2. Verfahren nach Anspruch 1, **dadurch gekennzeichnet, daß** das feste Kohlenstoffinaterial aus einem Kohlenwasserstoffgas erzeugt wird.

3. Verfahren nach Anspruch 1, **dadurch gekennzeichnet, daß** das feste Kohlenstoffmaterial aus Synthesegas erzeugt wird.

4. Verfahren nach Anspruch 1 oder 2, **dadurch gekennzeichnet, daß** das Metall oder die Legierung wenigstens ein Element umfaßt, das ausgewählt ist aus Silicium, Aluminium, Titan, Zirconium, Hafnium, Mangan, Chrom, Eisen und Nickel.

5. Verfahren nach Anspruch 5, **dadurch gekennzeichnet, daß** das Metall Silicium oder Ferrosilicium ist.

6. Verfahren nach Anspruch 4 oder Anspruch 5, **dadurch gekennzeichnet, daß** die Kohlenstoff-Nanofasern unter Verwendung eines Silica-geträgerten Katalysators hergestellt werden.

7. Verwendung fester Kohlenstoff-Nanofasern, hergestellt aus kohlenstoffhaltigem Gas, zur Reduktion von Metallerzen, um Metalle oder Metalllegierungen zu bilden.

## Revendications

1. Procédé pour la production d'un métal ou d'un alliage dans un réacteur de réduction, qui comprend la réduction d'un minerai métallique avec une matière carbonée solide produite à partir d'un gaz contenant du carbone en dehors du réacteur de réduction,
**caractérisé en ce que**
des nanofibres de carbone sont utilisées comme matière carbonée solide.

2. Procédé selon la revendication 1,
**caractérisé en ce que**
la matière carbonée solide est produite à partir de gaz hydrocarboné.

3. Procédé selon la revendication 1,
**caractérisé en ce que**
la matière carbonée solide est produite à partir de gaz de synthèse.

4. Procédé selon la revendication 1 ou 2,
**caractérisé en ce que**
le métal ou l'alliage comprend au moins un élément choisi parmi le silicium, l'aluminium, le titane, le zirconium, le hafnium, le manganèse, le chrome, le fer et le nickel.

5. Procédé selon la revendication 5,
**caractérisé en ce que**
le métal est le silicium ou le ferrosilicium.

6. Procédé selon la revendication 4 ou la revendication 5,
**caractérisé en ce que**
les nanofibres de carbone sont produites en utilisant un catalyseur supporté sur de la silice.

7. Utilisation de nanofibres de carbone solide produites à partir de gaz contenant du carbone, pour la réduction de minerais métalliques pour former des métaux ou des alliages métalliques.
